# EUROPÄISCHE PATENTSCHRIFT

(11) **EP 2 306 622 B1**
(45) Veröffentlichungstag und Bekanntmachung des Hinweises auf die Patenterteilung: **24.04.2013**
(21) Anmeldenummer: 09171973.2
(22) Anmeldetag: 01.10.2009
(51) Int. Cl.: H02K 11/00

(54) **Stator-Anordnung für einen Elektromotor**
Stator assembly for an electric motor
Arrangement de stator pour un moteur électrique

(43) Veröffentlichungstag der Anmeldung: 06.04.2011
(73) Patentinhaber: ebm-papst Mulfingen GmbH & Co. KG, 74673 Mulfingen (DE)
(72) Erfinder: Ströbel, Othmar, 74575 Schrozberg (DE); Best, Dieter, 74653 Ingelfingen (DE)
(74) Vertreter: Patentanwälte Dr. Solf & Zapf

(56) Entgegenhaltungen:
- EP-A1- 2 066 008
- DE-U1-202007 007 391
- JP-A- 2009 050 096

## Beschreibung

Die vorliegende Erfindung betrifft gemäß dem Oberbegriff des Anspruchs 1 eine Stator-Anordnung für einen Elektromotor, insbesondere für einen Außenläufermotor, bestehend aus einem Statorblechpaket mit durch Statornuten verlaufenden und auf Stirnseiten des Statorblechpaketes jeweils einen Wickelkopf bildenden Statorwicklungen sowie aus einer Verschaltungseinrichtung für die Statorwicklungen, wobei die Verschaltungseinrichtung eine auf einer Stator-Stirnseite den Wickelkopf überdeckende Schaltscheibe mit mindestens einem daran gehalterten, in einer Aufnahmetasche sitzenden Temperaturwächter zur Temperaturüberwachung der Statorwicklungen aufweist.

Ein derartiger, dem Oberbegriff des Anspruchs 1 entsprechender Stator ist in dem Dokument DE 20 2007 007 391 U1 beschrieben.

Ein Elektromotor mit einer ähnlichen Stator-Anordnung ist in dem Dokument EP 2 043 234 A1 beschrieben. Die aus dem mit Statorwicklungen bewickelten Statorblechpaket und der den Wickelkopf überdeckenden Schaltscheibe der Verschaltungseinrichtung bestehende Einheit wird bei der Motormontage durch axiales Zusammenfügen über elektrische Steckverbindungen mit einer Motorelektronik verbunden. Die Schaltscheibe trägt auf ihrer dem Wickel kopf zugewandten Seite mindestens einen so genannten Temperaturwächter, der die jeweilige Stator-Temperatur erfassen soll, um im Falle einer störungsbedingten Überhitzung ein Abschalten des Motors bzw. der Statorwicklungen zu bewirken.

Bei bekannten Elektromotoren ist der Temperaturwächter üblicherweise so angeordnet, dass er am Wickelkopf an der jeweiligen Statorwicklung zur Anlage gelangen soll. Dies gelingt aber in der Praxis häufig nicht in optimaler Weise, weil es durch Fertigungstoleranzen zu einer undefinierten Anlage oder sogar zu einem Luftspaltabstand zwischen dem Temperaturwächter und der Wicklung kommen kann. Deshalb können durch eine undefinierte Temperaturerfassung gravierende Störungen bis hin zu einem Totalausfall des Motors durch thermische Zerstörung auftreten. Außerdem muss häufig bei der Motor- bzw. Statormontage eine manuelle Verdrahtung des/der Temperaturwächter/s erfolgen, was zu einer aufwändigen Fertigung führt.

Der vorliegenden Erfindung liegt die Aufgabe zu Grunde, eine Stator-Anordnung der beschriebenen Art so zu verbessern, dass sie einfach und schnell montierbar ist und eine erhöhte Sicherheit gegen temperaturbedingte Störungen und Schäden erreicht wird.

Erfindungsgemäß wird dies durch die Merkmale des unabhängigen Anspruchs 1 erreicht. Vorteilhafte Ausgestaltungen der Erfindung sind in den abhängigen Ansprüchen definiert.

Demnach ist erfindungsgemäß vorgesehen, dass der Temperaturwächter in der federelastisch beweglich derart mit der Schaltscheibe verbundenen Aufnahmetasche sitzt, dass er (der Temperaturwächter) über die Aufnahmetasche einerseits in eine der Statornuten eingreift und andererseits dort mit federelastischer Vorspannung an der Statorwicklung zur Anlage gelangt. Hierbei ist die Aufnahmetasche derart formgemäß an die Nut- und Wicklungsgeometrie angepasst, dass sie axial fingerartig relativ weit (tief) in die Statornut eingreift und sich durch ihre federelastische Beweglichkeit mit einer bestimmten Anpresskraft großflächig eng an die Wicklung anlegen (anschmiegen) kann. Der Temperaturwächter ist spielfrei kraftschlüssig in die Aufnahmetasche eingeschoben, so dass er praktisch ohne Luftspalt eng in der Aufnahmetasche sitzt. Die Aufnahmetasche weist zumindest auf einer der jeweiligen Statorwicklung zugewandten Seite eine derart dünn ausgebildete Wandung auf, dass der Temperaturwächter mittelbar über diese dünne Wandung in wärmeleitendem Anlagekontakt mit der Statorwicklung steht.

Durch die federelastische Beweglichkeit des in der Aufnahmetasche sitzenden Temperaturwächters wird unter Ausgleich von Fertigungstoleranzen stets eine erforderliche Mindest-Anlagekraft an der Statorwicklung sichergestellt, was zu einem optimalen Wärmeübergang führt. Zudem ist die Wärmeerfassung innerhalb der Statornut im Gegensatz zur Erfassung am Wickelkopf besonders sicher, so dass eine erhöhte Sicherheit durch zuverlässiges Abschalten im Fehlerfall gewährleistet wird.

Die Aufnahmetasche besteht vorzugsweise aus einem elektrisch isolierenden Kunststoffmaterial. Indem zumindest die zur Anlage an der Statorwicklung vorgesehene Taschenwandung sehr dünn, z. B. mit einer Stärke von nur wenigen Zehntel mm (insbesondere etwa um 0,4 mm), ausgebildet ist, wird trotz Verwendung von Kunststoff ein hinreichend guter Wärmeübergang zwischen Wicklung und Temperaturwächter ermöglicht. Vorteilhafterweise kann für den Temperaturwächter durch seine Anordnung in der elektrisch isolierenden Aufnahmetasche eine preisgünstige Ausführung ohne eigene äußere Isolierung verwendet werden. Zudem kann der Temperaturwächter eine sehr kompakte, besonders flache Bauform haben, so dass er über die entsprechend schmale Aufnahmetasche auch bei großer Nutfüllung noch im verbleibenden Freiraum in der Statornut untergebracht sein kann.

In einer vorteilhaften Ausgestaltung der Erfindung sind mindestens zwei, vorzugsweise drei Temperaturwächter vorhanden, die gleichartig in jeweils einer Aufnahmetasche sitzen. Die Temperaturwächter mit den zugehörigen Aufnahmetaschen sind zum Eingreifen in verschiedene Statornuten an unterschiedlichen Stellen jeweils federelastisch mit der Schaltscheibe verbunden. Diese Ausführung mit vorzugsweise drei Temperaturwächtern eignet sich besonders für eine dreisträngige Motorausführung, indem jeder Motor-Wicklungsstrang separat bezüglich der Temperatur überwacht wird. Zweckmäßig sind alle Temperaturwächter elektrisch in Reihe geschaltet und mit einer Motorelektronik zu verbinden, die im Falle einer elektrischen Zustands-Änderung, insbesondere einer Unterbrechung des über die Temperaturwächter verlaufenden Stromkreises, eine Abschaltung des Motors bewirkt. Alle Aufnahmetaschen sind einstückig mit einem gemeinsamen Trägerteil verbunden und somit mittelbar über das Trägerteil an der Schaltscheibe befestigt. Hierzu ist das Trägerteil auf der dem Stator-Wickelkopf zugewandten Seite der Schaltscheibe mit dieser insbesondere über Rastverbindungen verbunden oder verbindbar. Jede Aufnahmetasche ist hierbei im Randbereich einer Einführöffnung für den Temperaturwächter über einen Verbindungssteg federelastisch mit dem Trägerteil einstückig verbunden. Das Trägerteil weist zudem vorteilhafterweise auch Fixiermittel für elektrische Verbindungsleitungen der Temperaturwächter sowie insbesondere auch elektrische Anschlusssteckverbinder auf. Somit bildet bei dieser vorteilhaften Ausgestaltung das Trägerteil mit den Temperaturwächtern eine fertig vormontierte und vorverdrahtete Baugruppe, die nur durch Verrasten an der Schaltscheibe zu befestigen ist. Dies führt zu einer extrem einfachen und schnellen Montage, indem auch eine aufwändige manuelle Einzelverdrahtung der Temperaturwächter vermieden wird. Die elektrische Verbindung mit einer Elektronik erfolgt über die Anschlusssteckverbinder des Trägerteils.

Weitere Ausgestaltungen und Vorteile werden anschließend noch beschrieben werden.

Anhand eines bevorzugten, in der Zeichnung veranschaulichten Ausführungsbeispiels soll die Erfindung im Folgenden genauer erläutert werden. Dabei zeigen:
- Fig. 1: eine Perspektivansicht einer erfindungsgemäßen, fertig vormontierten Stator-Anordnung mit Verschaltungseinrichtung und deren Schaltscheibe,
- Fig. 2: eine Seitenansicht des Stators gemäß Fig. 1,
- Fig. 3: eine gesonderte Seitenansicht der Verschaltungseinrichtung zur Veranschaulichung der Montageverbindung,
- Fig. 4: eine perspektivische Explosionsansicht der Verschaltungseinrichtung mit der Schaltscheibe und mit einem bevorzugten Temperaturwächter- Trägerteil mit Blickrichtung auf die statorseitige Innenseite der Schaltscheibe,
- Fig. 5: eine Ansicht entsprechend Fig. 4 im vormontierten Zustand der Teile,
- Fig. 6: eine gesonderte perspektivische Explosionsansicht nur des Trägerteils mit Temperaturwächtern, deren Verdrahtung und Anschlusssteckverbindern,
- Fig. 7: eine Ansicht nur des Trägerteils auf dessen andere, dem Stator zugewandte Seite,

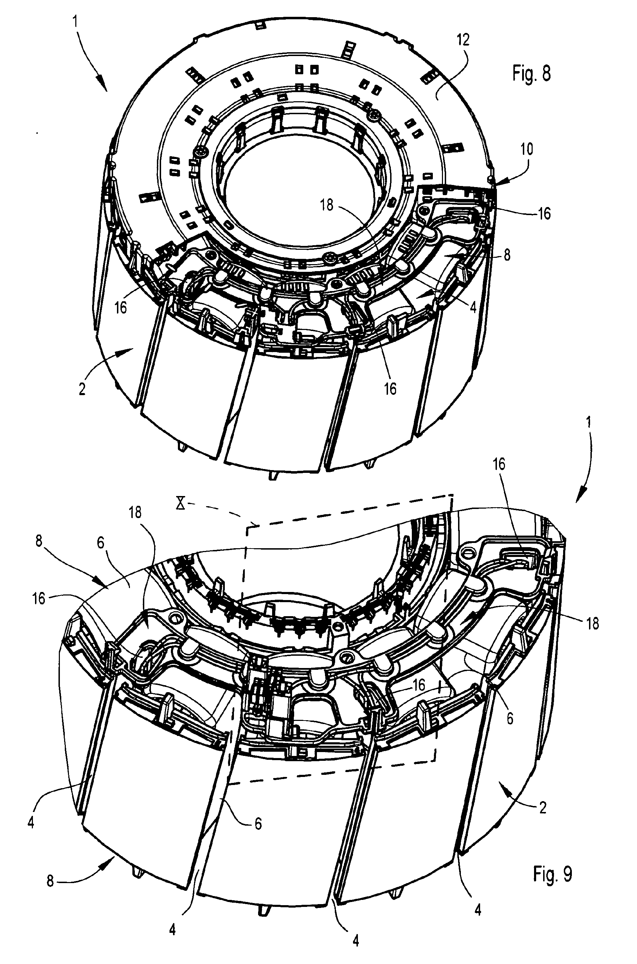

- Fig. 8: eine leicht vergrößerte Darstellung wie in Fig. 1, jedoch mit teilweise entfernter (aufgebrochener) Schaltscheibe zur Einsicht auf den darunterliegenden Bereich,
- Fig. 9: eine Ausschnittvergrößerung aus Fig. 8 und
- Fig. 10: eine weitere Vergrößerung des Bereiches X in Fig. 9.

In den verschiedenen Figuren der Zeichnung sind gleiche Teile stets mit den gleichen Bezugszeichen versehen, so dass jede eventuell nur einmal vorkommende Beschreibung eines Teils auch analog für andere Zeichnungsfiguren gilt, in denen das entsprechende Teil mit dem entsprechenden Bezugszeichen ebenfalls zu erkennen ist.

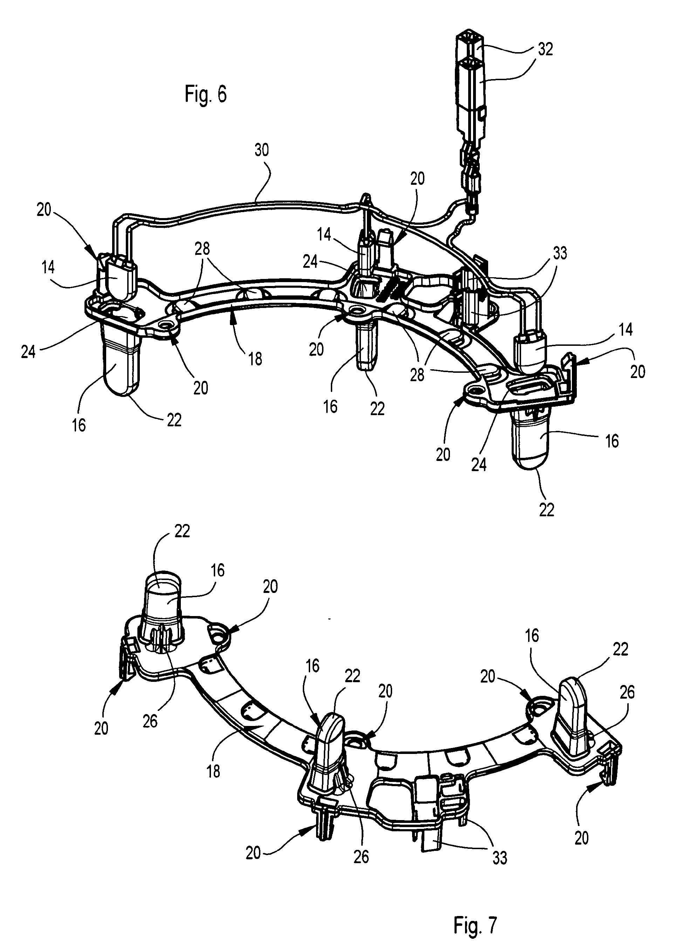

Eine erfindungsgemäße Stator-Anordnung 1 besteht im Wesentlichen aus einem Statorblechpaket 2 mit durch Statornuten 4 verlaufenden Statorwicklungen 6. Die Statorwicklungen 6 verlaufen außerhalb der Statornuten 4 im Bereich der Stirnseiten des Statorblechpaketes 2 jeweils von Nut zu Nut und bilden auf jeder Stirnseite einen so genannten Wickelkopf 8. Die Stator-Anordnung 1 weist weiterhin eine Verschaltungseinrichtung 10 zum elektrischen Verschalten der Statorwicklungen 6 untereinander und mit Versorgungsleitungen (nicht dargestellt) auf. Diese Verschaltungseinrichtung 10 besteht im Wesentlichen aus einer kreis- bzw. kreisringförmigen, in einer zur Stator-Längsachse senkrechten Ebene liegenden Schaltscheibe 12, die auf einer Stator-Stirnseite den Bereich des Wickelkopfes 8 der Statorwicklungen 6 überdeckt. Hierbei weist die Schaltscheibe 12 einerseits auf ihrer dem Wickel kopf 8 zugewandten Innenseite elektrische Verbindermittel zum Verschalten von Wicklungsdrahtenden der Statorwicklungen 6 untereinander und mit den Versorgungsleitungen auf. Diese Verbindermittel werden weiter unten noch genauer beschrieben werden. Andererseits ist an der Schaltscheibe 12 mindestens ein so genannter Temperaturwächter 14 gehaltert (s. dazu insbesondere Fig. 6), der zum temperaturabhängigen Abschalten der Statorwicklungen 6 im Falle einer Betriebsstörung dient. Dazu besteht der Temperaturwächter 14 aus einem Element, welches temperaturabhängig seinen Zustand ändert. Es kann sich um einen temperaturabhängigen Widerstand mit positivem Temperaturkoeffizient (PTC) oder mit negativem Temperaturkoeffizient (NTC) oder aber um ein Schaltelement handeln, welches in Abhängigkeit von der Temperatur schließt oder öffnet.

In der dargestellten, bevorzugten Ausgestaltung sind mehrere, und zwar insbesondere drei Temperaturwächter 14 vorgesehen (Fig. 6). Diese Ausführung eignet sich besonders für dreisträngige Motoren, wie kollektorlose, elektronisch kommutierte Motoren, deren drei Wicklungsstränge über eine Vollbrücken-Endstufe elektronisch angesteuert werden. Jeder der drei Temperaturwächter 14 überwacht einen der drei Wicklungsstränge auf Übertemperatur.

Erfindungsgemäß ist nun vorgesehen, dass der/jeder Temperaturwächter 14 in einer federelastisch derart mit der Schaltscheibe 12 verbundenen Aufnahmetasche 16 sitzt, dass der Temperaturwächter 14 über die Aufnahmetasche 16 in eine der Statornuten 4 eingreift und dort mit federelastischer Vorspannung an der jeweiligen Statorwicklung 6 zur Anlage gelangt. Für die bevorzugte Ausführung mit drei Temperaturwächtern 14 sind die zugehörigen Aufnahmetaschen 16 zum Eingreifen in verschiedene Statornuten 4 an unterschiedlichen Stellen jeweils federelastisch beweglich mit der Schaltscheibe 12 verbunden. Jeder Temperaturwächter 14 ist spielfrei kraftschlüssig in die zugehörige Aufnahmetasche 16 eingeschoben, wobei jede Aufnahmetasche 16 zumindest auf einer der jeweiligen Statorwicklung 6 zugewandten Seite eine derart dünn ausgebildete Wandung aufweist, dass der Temperaturwächter 14 mittelbar über diese dünne Taschenwandung in wärmeleitendem Anlagekontakt mit der Statorwicklung 6 steht.

Jede Aufnahmetasche 16 besteht bevorzugt aus einem elektrisch isolierenden Kunststoffmaterial. Der Temperaturwächter 14 selbst kann daher vorteilhafterweise ohne eigene elektrische Isolation ausgebildet sein, was zu einer kompakten Form und geringen Kosten führt.

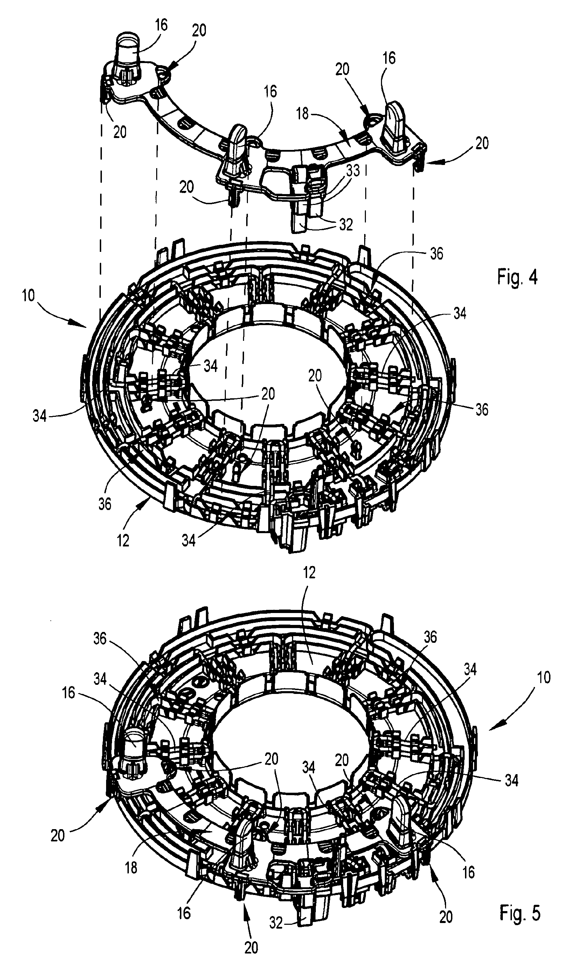

In vorteilhafter Ausgestaltung sind alle Aufnahmetaschen 16 einstückig mit einem gemeinsamen Trägerteil 18 verbunden. Bevorzugt besteht das Trägerteil 18 zusammen mit den Aufnahmetaschen 16 aus einem einstückigen Kunststoff-Formteil. Das Trägerteil 18 ist auf der dem Stator-Wickel kopf 8 zugewandten Seite der Schaltscheibe 12 mit dieser insbesondere über Rastverbindungen 20 verbunden oder verbindbar. Demnach sind die Aufnahmetaschen 16 mit der Schaltscheibe 12 mittelbar über das Trägerteil 18 lösbar verbunden. Das Trägerteil 18 ist in Anpassung an die Kreisringform der Schaltscheibe 12 im Wesentlichen kreisbogenförmig ausgebildet, wobei die Aufnahmetaschen 16 an solchen Stellen des Trägerteils 18 angeordnet sind, dass sie beim axialen Aufsetzen der Schaltscheibe 12 auf das Statorblechpaket 2 selbsttätig in die vorgesehenen Statornuten 4 zwecks Anlagekontakt mit den Statorwicklungen 6 eingreifen. Dazu weist jede Aufnahmetasche 16 eine längliche, axial fingerartig vorstehende Form mit einem in die Statornut 4 weisenden geschlossenen Ende 22 und einer der Schaltscheibe 12 zugewandten Einführöffnung 24 auf. Dazu wird insbesondere auf Fig. 6 und 7 verwiesen. Jede Aufnahmetasche 16 ist im Randbereich der Einführöffnung 24 über einen Verbindungssteg 26 federelastisch mit dem Trägerteil 18 verbunden. Der Verbindungssteg 26 bildet somit eine Art Gelenk für eine federelastische Schwenkbeweglichkeit der Aufnahmetasche 16. Im übrigen Umfangsbereich der Einführöffnung 24 besteht keine Verbindung zwischen der Aufnahmetasche 16 und dem Trägerteil 18. Das Trägerteil 18 weist im Bereich der Einführöffnung 24 jeder Aufnahmetasche 16 eine entsprechende Durchgangsöffnung auf, so dass jeder Temperaturwächter 14 gemäß Fig. 6 auf einfache Weise in die jeweilige Aufnahmetasche 16 eingesteckt werden kann. Die Rastverbindungen 20 bestehen einerseits aus äußeren Rastarmen des Trägerteils 18, die den Außenrand der Schaltscheibe 12 mit Rastnasen umgreifen (Fig. 5). Andererseits weist das Trägerteil 18 am inneren Umfangsrand Rastöffnungen auf, in die zugehörige Rastansätze der Schaltscheibe 12 rastend eingreifen.

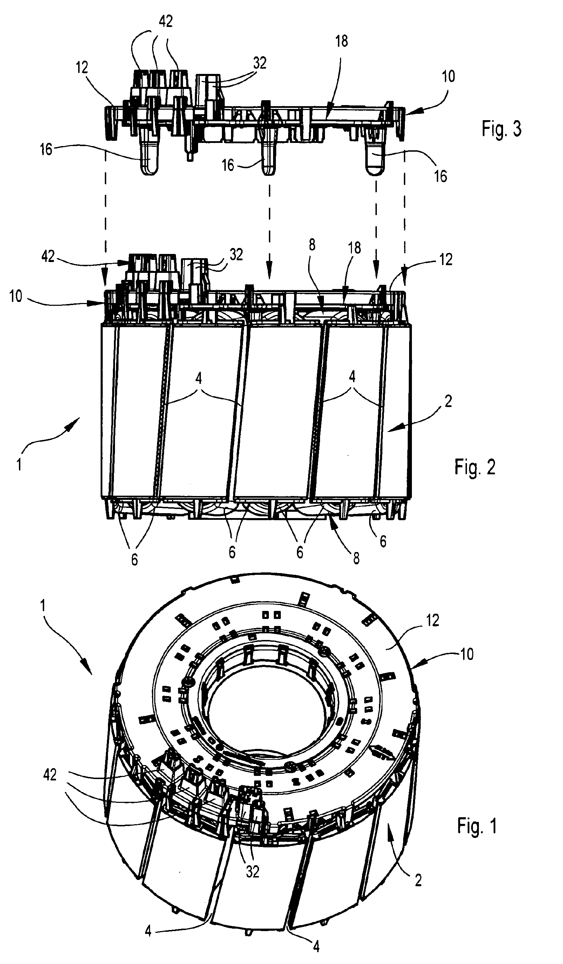

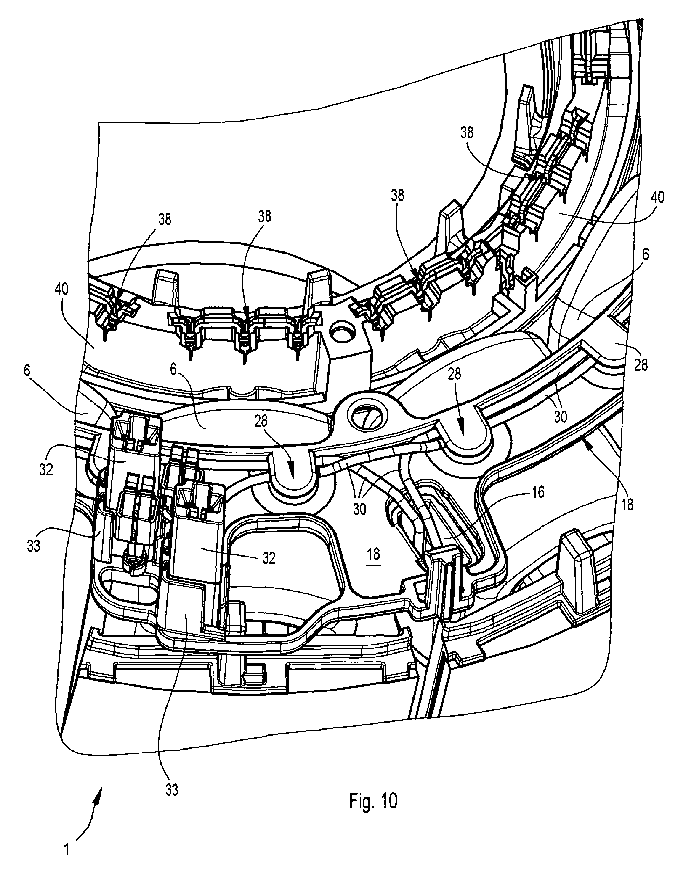

In weiterer vorteilhafter Ausgestaltung weist das Trägerteil 18 auch geeignete Fixiermittel 28 für elektrische Verbindungsleitungen 30 der Temperaturwächter 14 sowie insbesondere auch elektrische Anschlusssteckverbinder 32 auf. Das Trägerteil 18 bildet somit zusammen mit den Temperaturwächtern 14 eine vormontierte, fertig vorverdrahtete Baugruppe, die auf einfache Weise durch axiale Steckfügevorgänge montiert werden kann. Dabei ragen die Anschlusssteckverbinder 32 durch Öffnungen bzw. Ausnehmungen der Schaltscheibe 12 hindurch auf deren von dem Wickelkopf 8 wegweisende Außenseite; vgl. Fig. 1. Wie am besten in Fig. 6 und 10 zu erkennen ist, bestehen die Fixiermittel 28 mit Vorteil aus laschenartigen Halteabschnitten, unter die die Verbindungsleitungen 30 einführbar sind, so dass sie auf dem Trägerteil 18 gehalten sind. Die Anschlusssteckverbinder 32 sind in Halteaufnahmen 33 des Trägerteils 18 eingerastet.

Was nun die oben bereits kurz erwähnten elektrischen Verbindermittel der Schaltscheibe 12 zum Verschalten der Statorwicklungen 6 betrifft, so bestehen diese gemäß Fig. 4 und 5 aus Drahtleitern 34, die mit einem bestimmten, in Umfangsrichtung mäanderartigen Verlauf derart in Fixiermitteln 36 der Schaltscheibe 12 geführt und fixiert sind, dass sie durch einfaches axiales Aufsetzen der Schaltscheibe 12 auf das Statorblechpaket 2 selbsttätig über Schneidklemmkontakte 38 kontaktiert werden, die in einer Stator-Umspritzung 40 aus Kunststoff gehaltert sind. Dazu wird insbesondere auf die vergrößerte Darstellung in Fig. 10 verwiesen. Bevorzugt sind die Schneidklemmkontakte 38 in einer bestimmten Umfangsverteilung in einem ringstegförmigen Fortsatz der Stator-Umspritzung 40 gehaltert. Zweckmäßig sind die Schneidklemmkontakte 38 zudem derart als Doppelkontakte ausgeführt, dass auch die nicht dargestellten Wicklungsdrahtenden der Statorwicklungen 6 in den Schneidklemmkontakten 38 kontaktiert werden können. Auf diese Weise kann eine bestimmte Wicklungsverschaltung realisiert werden. Zudem können über die Drahtleiter 34 die Statorwicklungen 6 auch von der nicht dargestellten Motorelektronik mit einer Betriebsspannung versorgt werden. Dazu sind die Drahtleiter 34 auch mit elektrischen Steckverbindern 42 verbunden, die auf der Außenseite der Schaltscheibe 12 - insbesondere benachbart zu den Anschlusssteckverbindern 32 der Temperaturwächter 14 - vorstehend angeordnet sind. Die vormontierte Stator-Anordnung 1 kann dadurch auf einfache Weise durch einen axialen Steckfügevorgang mit der Motorelektronik verbunden werden.

Wie sich weiter aus Fig. 4 und 5 ergibt, bestehen die Draht-Fixiermittel 36 aus nutartigen, in Umfangsrichtung kreisbogenförmig verlaufenden, konzentrischen Kanälen und aus Klemmhaltern insbesondere für radial verlaufende Drahtabschnitte. Mit Vorteil sind in den Bereichen, wo die Kontaktierung in den Schneidklemmkontakten 38 erfolgt, ambossartige Auflagestege für die Drahtleiter 34 gebildet, die die Drahtleiter 34 beim Fügen gegen die zum Einschneiden der Kontakte 38 erforderliche Kraft abstützen.

## Patentansprüche

1. Stator-Anordnung (1) für einen Elektromotor, bestehend aus einem Statorblechpaket (2) mit durch Statornuten (4) verlaufenden und auf Stirnseiten des Statorblechpaketes (2) jeweils einen Wickelkopf (8) bildenden Statorwicklungen (6) sowie aus einer Verschaltungseinrichtung (10) für die Statorwicklungen (6), wobei die Verschaltungseinrichtung (10) eine auf einer Stator-Stirnseite den Wickelkopf (8) überdeckende Schaltscheibe (12) mit mindestens einem daran gehalterten, in einer Aufnahmetasche (16) sitzenden Temperaturwächter (14) zur Temperaturüberwachung der Statorwicklungen (6) aufweist,
**dadurch gekennzeichnet, dass** die Aufnahmetasche (16) federelastisch derart mit der Schaltscheibe (12) verbunden ist, dass der Temperaturwächter (14) über die Aufnahmetasche (16) in eine der Statornuten (4) eingreift und dort mit federelastischer Vorspannung an der jeweiligen Statorwicklung (6) zur Anlage gelangt, wobei die Aufnahmetasche (16) einstückig mit einem Trägerteil (18) verbunden ist, wobei das Trägerteil (18) auf der dem Stator-Wickelkopf (18) zugewandten Seite der Schaltscheibe (12) mit dieser verbunden ist, und wobei die Aufnahmetasche (16) zum Eingriff in eine der Statornuten (4) eine längliche, axial fingerartig vorstehende Form mit einem in die Statomut (4) weisenden geschlossenen Ende (22) und einer der Schaltscheibe (12) zugewandten Einführöffnung (24) aufweist, wobei die Aufnahmetasche (16) im Randbereich der Einführöffnung (24) über einen Verbindungssteg (26) federelastisch mit dem Trägerteil (18) verbunden ist.

2. Stator-Anordnung nach Anspruch 1,
**dadurch gekennzeichnet, dass** mindestens zwei, vorzugsweise drei Temperaturwächter (14) gleichartig in jeweils einer Aufnahmetasche (16) sitzen, wobei die Aufnahmetaschen (16) zum Eingreifen in verschiedene Statornuten (4) an unterschiedlichen Stellen jeweils federelastisch mit dem gemeinsamen Trägerteil (18) verbunden sind.

3. Stator-Anordnung nach Anspruch 1 oder 2,
**dadurch gekennzeichnet, dass** der/jeder Temperaturwächter (14) spielfrei kraftschlüssig in die Aufnahmetasche (16) eingeschoben ist, wobei die Aufnahmetasche (16) zumindest auf einer der jeweiligen Statorwicklung (6) zugewandten Seite eine derart dünn ausgebildete Wandung aufweist, dass der Temperaturwächter (14) mittelbar über diese dünne Wandung in wärmeleitendem Anlagekontakt mit der Statorwicklung (6) steht.

4. Stator-Anordnung nach einem der Ansprüche 1 bis 3,
**dadurch gekennzeichnet, dass** die/jede Aufnahmetasche (16) aus einem elektrisch isolierenden Kunststoffmaterial besteht.

5. Stator-Anordnung nach einem der Ansprüche 1 bis 4,
**dadurch gekennzeichnet, dass** das Trägerteil (18) mit der Schaltscheibe (12) über Rastverbindungen (20) verbunden ist.

6. Stator-Anordnung nach einem der Ansprüche 1 bis 5,
**dadurch gekennzeichnet, dass** das Trägerteil (18) Fixiermittel (28) für elektrische Verbindungsleitungen (30) des/jedes Temperaturwächters (14) sowie insbesondere auch elektrische Anschlusssteckverbinder (32) aufweist.

7. Stator-Anordnung nach Anspruch 6,
**dadurch gekennzeichnet, dass** die Anschlusssteckverbinder (32) durch die Schaltscheibe (12) hindurch auf deren von dem Wickelkopf (8) wegweisende Außenseite ragen.

8. Stator-Anordnung nach einem der Ansprüche 1 bis 7,
**dadurch gekennzeichnet, dass** die Schaltscheibe (12) auf ihrer dem Wickelkopf (8) zugewandten Innenseite elektrische Verbindermittel zum Verschalten von Wicklungsdrahtenden der Statorwicklungen (6) untereinander und mit Versorgungsleitungen aufweist.

9. Stator-Anordnung nach Anspruch 8,
**dadurch gekennzeichnet, dass** die elektrischen Verbindermittel aus Drahtleitern (34) bestehen, die mit einem bestimmten Verlauf derart in Fixiermitteln (36) der Schaltscheibe (12) geführt und fixiert sind, dass sie durch axiales Aufsetzen der Schaltscheibe (12) auf das Statorblechpaket (2) selbsttätig über in einer Stator-Umspritzung (40) gehalterte Schneidklemmkontakte (38) kontaktiert werden.

10. Stator-Anordnung nach Anspruch 9,
**dadurch gekennzeichnet, dass** die Drahtleiter (34) mit elektrischen Steckverbindern (42) verbunden sind, die auf der Außenseite der Schaltscheibe (12) - insbesondere benachbart zu den Anschlusssteckverbindern (32) der Temperaturwächter (14) - vorstehend angeordnet sind.

## Claims

1. A stator arrangement (1) for an electric motor, consisting of a stator iron core (2) with stator windings (6), running through stator slots (4) and forming a respective winding head (8) on end faces of the stator iron core (2), as well as of an interconnection device (10) for the stator windings (6), wherein the interconnection device (10) has a contact disc (12), covering the winding head (8) at a stator end-face, with at least one temperature monitor (14), mounted thereon and located in a receiving pocket (16), to monitor the temperature of the stator windings (6),
**characterised in that** the receiving pocket (16) is resiliently connected to the contact disc (12) in such a manner that the temperature monitor (14) engages, via the receiving pocket (16), one of the stator slots (4) and there comes to rest against the respective stator winding (6) with resilient prestressing, wherein the receiving pocket (16) is integrally connected to a carrier part (18), wherein the carrier part (18) is connected to the contact disc (12) on the side of the latter facing the stator winding-head (18), and wherein for engagement in one of the stator slots (4), the receiving pocket (16) has an elongated form, projecting in an axially finger-like manner, with a closed end (22) directed into the stator slot (4) and an insertion opening (24) facing the contact disc (12), wherein the receiving pocket (16) is in the edge region of the insertion opening (24) resiliently connected to the carrier part (18) via a connection flange (26).

2. A stator arrangement according to claim 1,
**characterised in that** at least two, preferably three, temperature monitors (14) are located in a respective receiving pocket (16) in the same manner, wherein for engagement in different stator slots (4), the receiving pockets (16) are in each case resiliently connected to the common carrier part (18) at different sites.

3. A stator arrangement according to claim 1 or 2,
**characterised in that** the/each temperature monitor (14) is inserted without play and in a force-locked manner into the receiving pocket (16), wherein the receiving pocket (16) has, at least on a side facing the respective stator winding (6), a wall which is so thin that the temperature monitor (14) is via this thin wall in indirect heat-conducting bearing contact with the stator winding (6).

4. A stator arrangement according to any one of claims 1 to 3, **characterised in that** the/each receiving pocket (16) is made of an electrically insulating plastics material.

5. A stator arrangement according to any one of claims 1 to 4, **characterized in that** the carrier part (18) is connected to the contact disc (12) via locking connections (20).

6. A stator arrangement according to any one of claims 1 to 5, **characterised in that** the carrier part (18) has fixing means (28) for electrical connecting lines (30) of the/each temperature monitor (14) as well as in particular also electrical joining connectors (32).

7. A stator arrangement according to claim 6,
**characterised in that** the joining connectors (32) project through the contact disc (12) on its exterior directed away from the winding head (8).

8. A stator arrangement according to any one of claims 1 to 7, **characterised in that** the contact disc (12) has, on its inner face facing the winding head (8), electrical connector means for the interconnection of winding wire ends of the stator windings (6) among themselves and with supply lines.

9. A stator arrangement according to claim 8,
**characterised in that** the electrical connector means are composed of wire conductors (34) which with a certain course are guided and fixed in fixing means (36) of the contact disc (12) in such a manner that they are, through axial placement of the contact disc (12) on the stator iron core (2), contacted automatically via insulation displacement contacts (38) mounted in a stator overmould (40).

10. A stator arrangement according to claim 9,
**characterised in that** the wire conductors (34) are connected to electrical connectors (42) arranged in a projecting manner on the exterior of the contact disc (12) - in particular adjacent to the joining connectors (32) of the temperature monitors (14).

## Revendications

1. Ensemble stator (1) pour un moteur électrique, constitué d'un empilage de tôles de stator (2) doté d'enroulements de stator (6) s'étendant à travers des encoches de stator (4) et formant respectivement une tête d'enroulement (8) sur des côtés frontaux de l'empilage de tôles de stator (2) ainsi que d'un câblage (10) pour les enroulements de stator (6), dans lequel le câblage (10) présente un disque de commutation (12) recouvrant la tête d'enroulement (8) sur un côté frontal du stator et doté au moins d'un dispositif de contrôle de température (14) maintenu sur ledit disque de commutation, situé dans une poche de réception (16) et servant à surveiller la température des enroulements de stator (6),
**caractérisé en ce que** la poche de réception (16) est reliée de manière élastique au disque de commutation (12) de telle manière que le dispositif de contrôle de température (14) vient en prise avec une des encoches de stator (4) par l'intermédiaire de la poche de réception (16) et de là vient avec une précontrainte élastique en appui au niveau de l'enroulement de stator (6) respectif, dans lequel la poche de réception (16) est reliée d'un seul tenant à une partie de support (18), dans lequel la partie de support (18) est reliée au disque de commutation (12) sur le côté de ce dernier tourné vers la tête d'enroulement du stator (18), et dans lequel la poche de réception (16) destinée à venir en prise avec une des encoches de stator (4) présente une forme allongée faisant saillie axialement à la manière d'un doigt et présentant une extrémité (22) fermée orientée dans l'encoche de stator (4) et un orifice d'introduction (24) tourné vers le disque de commutation (12), dans lequel la poche de réception (16) est reliée dans la zone de bord de l'orifice d'introduction (24) de manière élastique à la partie de support (18) par l'intermédiaire d'une entretoise d'assemblage (26).

2. Ensemble stator selon la revendication 1,
**caractérisé en ce qu'**au moins deux dispositifs de contrôle de température (14), de préférence trois, se trouvent de la même manière dans respectivement une poche de réception (16), dans lequel les poches de réception (16) destinées à venir en prise avec diverses encoches de stator (4) sont reliées en divers endroits respectivement de manière élastique à la partie de support (18) commune.

3. Ensemble stator selon la revendication 1 ou 2,
**caractérisé en ce que** le/chaque dispositif de contrôle de température (14) est inséré sans jeu, à force dans la poche de réception (16), dans lequel la poche de réception (16) présente au moins sur un côté tourné vers l'enroulement de stator (6) respectif une paroi présentant une telle faible épaisseur que le dispositif de contrôle de température (14) se trouve indirectement par l'intermédiaire de ladite paroi fine en contact d'appui thermoconducteur avec l'enroulement de stator (6).

4. Ensemble stator selon l'une quelconque des revendications 1 à 3,
**caractérisé en ce que** la/chaque poche de réception (16) est constituée d'un matériau plastique isolant électriquement.

5. Ensemble stator selon l'une quelconque des revendications 1 à 4,
**caractérisé en ce que** la partie de support (18) est reliée au disque de commutation (12) par l'intermédiaire de dispositifs d'assemblage par encliquetage (20).

6. Ensemble stator selon l'une quelconque des revendications 1 à 5,
**caractérisé en ce que** la partie de support (18) présente des moyens de fixation (28) pour des lignes de raccordement électriques (30) du/de chaque dispositif de contrôle de température (14) ainsi qu'en particulier également des connecteurs de connexion électriques (32).

7. Ensemble stator selon la revendication 6,
**caractérisé en ce que** les connecteurs de connexion (32) font saillie à travers le disque de commutation (12) sur le côté extérieur de ce dernier s'éloignant de la tête d'enroulement (8).

8. Ensemble stator selon l'une quelconque des revendications 1 à 7,
**caractérisé en ce que** le disque de commutation (12) présente sur son côté intérieur tourné vers la tête d'enroulement (8), des moyens de raccordement électriques servant à interconnecter des extrémités de fil d'enroulement des enroulements de stator (6) les uns aux autres et dotés de lignes d'alimentation.

9. Ensemble stator selon la revendication 8,
**caractérisé en ce que** les moyens de raccordement électriques sont constitués de fils conducteurs (34) qui sont guidés et fixés selon un certain tracé dans des moyens de fixation (36) du disque de commutation (12) de telle manière qu'ils sont mis en contact de manière autonome par l'intermédiaire de contacts autodénudants (38) maintenus dans une extrusion de stator (40) en plaçant axialement le disque de commutation (12) sur l'empilage de tôles de stator (2).

10. Ensemble stator selon la revendication 9,
**caractérisé en ce que** les fils conducteurs (34) sont reliés à des connecteurs (42) électriques, qui sont disposés de manière saillante sur le côté extérieur du disque de commutation (12) - en particulier de manière adjacente par rapport aux connecteurs de connexion (32) des dispositifs de contrôle de température (14).
